# EUROPÄISCHE PATENTANMELDUNG

(11) **EP 1 447 815 A1**
(43) Veröffentlichungstag der Anmeldung: **18.08.2004**
(21) Anmeldenummer: 03003520.8
(22) Anmeldetag: 15.02.2003
(51) Int. Cl.: G21C 19/07, G21F 5/012

(54) **Transport- und/oder Lagerbehälter für abgebrannte Brennelemente**

(71) Anmelder: GNB Gesellschaft für Nuklear-Behälter mbH, 45127 Essen (DE)
(72) Erfinder: Diersch, Rudolf, Dr., 45147 Essen (DE); Hüggenberg, Roland, 44795 Bochum (DE); Gartz, Robert, 44866 Bochum (DE)
(74) Vertreter: Rohmann, Michael, Dr.

(57) **Zusammenfassung**

Transport- und/oder Lagerbehälter für abgebrannte Brennelemente mit Behältermantel und Behälterinnenraum, wobei in dem Behälterinnenraum eine Mehrzahl von Brennelementschachtrohren für die Aufnahme der Brennelemente nebeneinander angeordnet ist. In zumindest einem Teil der Schachtrohrwände der Brennelementschachtrohre sind nach außen vorstehende Abstandselemente ausgebildet. Die Abstandselemente einer Schachtrohrwand stehen in Berührungskontakt mit einer benachbarten Schachtrohrwand eines benachbarten Brennelementschachtrohres. Neben den Abstandselementen sind berührungskontaktfreie Bereiche zwischen den benachbarten Schachtrohrwänden vorgesehen. Eine Mehrzahl von Abstandselementen ist sowohl über die Länge als auch über die Breite einer Schachtrohrwand verteilt angeordnet.

## Beschreibung

Die Erfindung betrifft einen Transport- und/oder Lagerbehälter für abgebrannte Brennelemente mit Behältermantel und Behälterinnenraum, wobei in dem Behälterinnenraum eine Mehrzahl von Brennelementschachtrohren für die Aufnahme der Brennelemente nebeneinander angeordnet ist. - Die Brennelementschachtrohre haben somit die Aufgabe der Aufnahme und Positionierung der Brennelemente in dem Transport- und/oder Lagerbehälter. Die zueinander parallelen Brennelementschachtrohre sind zu Bündeln zusammengefasst und werden beispielsweise durch Spannbänder zusammengehalten. Sie bilden einen Tragkorb für die Brennelemente. Solche Tragkörbe müssen einerseits die erforderliche Unterkritikalität gewährleisten und andererseits eine ausreichende Wärmeabfuhr von den Brennelementen an die Behälterschachtwand sicherstellen. Die vorgenannten Funktionen müssen sowohl unter normalen Transport- und Betriebsbedingungen als auch unter hypothetischen Unfallbedingungen funktionssicher erfüllt werden. Deshalb muss die Tragkonstruktion bzw. das Aggregat aus den Brennelementschachtrohren auch eine ausreichend hohe Festigkeit aufweisen.

Bei aus der Praxis bekannten Transport- und/oder Lagerbehältern liegen die Brennelementschachtrohre mit ihren Kontaktflächen über ihre gesamte Länge unmittelbar aneinander. Bei der üblichen Unterwasserbeladung eines solchen Behälters dringt Wasser in die Bereiche zwischen den Schachtrohrwänden. Der dabei entstehende nur wenige zehntelmillimeterdicke Wasserfilm erschwert ganz erheblich die nach der Entwässerung des Behälters erforderliche Behältertrocknung.

Es resultieren unerwünscht lange Trocknungszeiten. Damit verbunden ist ein Aufheizen der Brennstabhüllrohre, so dass eine Zwischenkühlung mit Helium erforderlich wird. Diese Maßnahmen sind sehr aufwendig und bedingen zudem eine zusätzliche beachtliche Strahlenbelastung für das beteiligte Personal.

Aus DE 35 19 838 A1 ist ein Lagergestell für Brennelemente bekannt, bei dem die Brennelementschachtrohre an ihrer Außenseite als Sicken ausgebildete Abstandselemente zur gegenseitigen Distanzierung der Brennelementschachtrohre aufweisen. Dabei sollen die Sicken sicherstellen, dass zwischen benachbarten Brennelementschachtrohren und somit auch zwischen den darin untergebrachten Brennelementen ein sicherheitstechnisch erforderlicher Mindestabstand nicht unterschritten werden kann. Eine Sicke ist hier jeweils nur am oberen und am unteren Ende einer Schachtrohrwand vorgesehen. Bei Aggregaten aus solchen Brennelementschachtrohren kann es bei mechanischen und thermischen Beanspruchungen und insbesondere als Folge eines Unfalls zu Verbiegungen und Ausbeulungen der sickenfreien Schachtrohrwandabschnitte kommen. Daraus kann sich ein unerwünschter flächiger Berührungskontakt zwischen benachbarten Schachtrohrwänden ergeben.

Aus US 4 115 700 sind Brennelementschachtrohre mit einem quadratischen Querschnitt bekannt, die über die Länge ihrer Schachtrohrwände verteilte Abstandselemente aufweisen, die jeweils über nahezu die gesamte Breite der Schachtrohrwand verlaufen. Dadurch wird ein Entweichen von Flüssigkeitsdämpfen in Längsrichtung der Brennelementschachtrohre quasi unmöglich und somit ist eine effektive Trocknung bei diesen Brennelementschachtrohren kaum durchführbar.

Demgegenüber liegt der Erfindung das technische Problem zugrunde, einen Transport- und/oder Lagerbehälter der eingangs genannten Art anzugeben, bei dem eine einfache und effektive Trocknung insbesondere auch in den Bereichen zwischen den Brennelementschachtrohren möglich ist und bei dem zugleich eine optimale Wärmeabfuhr von den Brennelementen an die Behälterwände sowie eine ausreichende Festigkeit gewährleistet ist. Mit dem erfindungsgemäßen Transport- und/oder Lagerbehälter soll zudem die erforderliche Unterkritikalität sichergestellt werden und die oben zum Stand der Technik beschriebenen Nachteile sollen vermieden werden.

Zur Lösung dieses technischen Problems lehrt die Erfindung einen Transport- und/oder Lagerbehälter für abgebrannte Brennelemente mit Behältermantel und Behälterinnenraum, wobei in dem Behälterinnenraum eine Mehrzahl von Brennelementschachtrohren für die Aufnahme der Brennelemente nebeneinander angeordnet ist,
wobei in zumindest einem Teil der Schachtrohrwände der Brennelementschachtrohre nach außen vorstehende Abstandselemente ausgebildet sind,
wobei die Abstandselemente einer Schachtrohrwand in Berührungskontakt mit einer benachbarten Schachtrohrwand eines benachbarten Brennelementschachtrohres stehen,
wobei zwischen den Abstandselementen berührungskontaktfreie Bereiche abstandsspaltbildend zwischen den benachbarten Schachtrohrwänden vorgesehen sind
und wobei eine Mehrzahl von Abstandselementen sowohl über die Länge als auch über die Breite einer Schachtrohrwand verteilt angeordnet ist.

Die Brennelementschachtrohre bilden einen Tragkorb für die Brennelemente und die zueinander parallelen Brennelementschachtrohre sind unmittelbar benachbart zu einem Bündel zusammengefasst und gleichsam dicht gepackt. Die Brennelementschachtrohre können insbesondere einen rechteckförmigen bzw. quadratischen Querschnitt aufweisen. Bei dieser Ausführungsform hat dann jedes Brennelementschachtrohr insgesamt vier Schachtrohrwände. Nach einer anderen bevorzugten Ausführungsform der Erfindung kann ein Brennelementschachtrohr einen sechseckigen Querschnitt aufweisen. Dieses Brennelementschachtrohr weist dann sechs Schachtrohrwände auf.

Länge einer Schachtrohrwand meint im Rahmen der Erfindung die Längserstreckung der Schachtrohrwand parallel zur Längsachse des Behälters bzw. zur Längsachse des Brennelementschachtrohres. Dass die Abstandselemente über die Breite einer Schachtrohrwand verteilt sein sollen, meint im Rahmen der Erfindung einerseits, dass eine Mehrzahl von Abstandselementen auf gleicher vertikaler Höhe über die Breite einer Schachtrohrwand verteilt sind. Es liegt aber auch im Rahmen der Erfindung, dass die Abstandselemente nicht zwingend auf gleicher vertikaler Höhe über die Breite einer Schachtrohrwand verteilt sind, sondern auch höhenversetzt über die Breite der Schachtrohrwand verteilt sein können. Vertikale Höhe bezieht sich auf den aufgestellten Zustand eines Brennelementschachtrohres, in dem die Längsachse des Brennelement schachtrohres vertikal angeordnet ist. Nach bevorzugter Ausführungsform der Erfindung sind die Abstandselemente rasterartig auf einer Schachtrohrwand verteilt. Erfindungsgemäß sind die berührungskontaktfreien Bereiche zwischen den Abstandselementen bzw. zwischen den Schachtrohrwänden mit der Maßgabe vorgesehen bzw. angeordnet, dass bei Trocknung des Behälterinnenraumes Flüssigkeitsdampf - insbesondere Wasserdampf - über die berührungskontaktfreien Bereiche und aus den berührungskontaktfreien Bereichen aus dem Behälterinnenraum abführbar ist. Die mit Hilfe der Abstandselemente gebildeten Abstandsspalte zwischen benachbarten Schachtrohrwänden ermöglichen also eine effektive Trocknung der Zwischenräume zwischen den Schachtrohrwänden. Erfindungsgemäß werden die Abstandselemente mit der Maßgabe auf der Schachtrohrwand verteilt, dass zwischen den Abstandselementen Freiräume verbleiben und somit Flüssigkeitsdampf in Längsrichtung der Schachtrohrwände bzw. Brennelementschachtrohre abziehen bzw. entweichen kann. In jeder vertikalen Höhe einer Schachtrohrwand sind die Abstandselemente vorzugsweise mit der Maßgabe über die Breite der Schachtrohrwand verteilt, dass zumindest 40 %, bevorzugt zumindest 50 % der Breite der Schachtrohrwand von Abstandselementen frei ist. Vertikale Höhe bezieht sich auf die Längserstreckung bzw. Länge einer Schachtrohrwand bzw. auf den aufgestellten Zustand eines Brennelementschachtrohres mit vertikal orientierter Längsachse des Brennelementschachtrohres.

Es liegt im Rahmen der Erfindung, dass eine Vielzahl von Abstandselementen auf einer Schachtrohrwand angeordnet wird. Nach einer sehr bevorzugten Ausführungsform der Erfindung sind über 40 Abstandselemente pro m² einer Schachtrohrwand vorgesehen.

Die Abstandselemente können beispielsweise in Form von Nocken, Sicken oder auch als Schweißpunkte in der Oberfläche der Schachtrohrwand verwirklicht werden. Nach sehr bevorzugter Ausführungsform, der im Rahmen der Erfindung ganz besondere Bedeutung zukommt, sind die Abstandselemente aus der Schachtrohrwand gebildet. Die Abstandselemente bestehen bei dieser Ausführungsform also aus dem Material der Schachtrohrwand und entstehen durch Bearbeitung der Schachtrohrwand, indem insbesondere Ausbeulungen bzw. Erhebungen in der Schachtrohrwand erzeugt werden.

Vorzugsweise beträgt die Höhe eines Abstandselementes in Bezug auf die Ebene der Schachtrohrwand 0,3 bis 2,5 mm, bevorzugt 0,3 bis 2 mm und sehr bevorzugt 0,5 bis 1 mm. Diese letztgenannten Ausführungsformen haben sich im Rahmen der Erfindung ganz besonderes bewährt. Nach sehr bevorzugter Ausführungsform ragen die Abstandselemente einer Schachtrohrwand in abstandselementfreie Bereiche der benachbarten Schachtrohrwand und stehen in Berührungskontakt mit dieser benachbarten Schachtrohrwand. Mit anderen Worten sind die den Abstandselementen der einen Schachtrohrwand gegenüberliegenden Bereiche der benachbarten Schachtrohrwand abstandselementfrei ausgebildet und umgekehrt. Bei dieser bevorzugten Ausführungsform der Erfindung bestimmt die Höhe der Abstandselemente die Breite des Abstandsspaltes zwischen zwei benachbarten Schachtrohrwänden. Vorzugsweise beträgt die Breite des Abstandsspaltes 0,3 bis 2,5 mm, bevorzugt 0,3 bis 2 mm und sehr bevorzugt 0,5 bis 1,5 mm. Nach ganz besonderer Ausführungsform der Erfindung hat ein Abstandsspalt zwischen zwei benachbarten Schachtrohrwänden eine Breite von 0,4 bis 1,2 mm, vorzugsweise 0,5 bis 1 mm. Diese letztgenannten Breiten für den Abstandsspalt haben sich unter anderem für eine effektive Trocknung des Behälters ganz besonders bewährt. - Grundsätzlich ist es im Übrigen auch möglich, dass Abstandselemente der einen Schachtrohrwand in Berührungskontakt mit Abstandselementen der benachbarten Schachtrohrwand kommen.

Nach sehr bevorzugter Ausführungsform der Erfindung haben die Abstandselemente einen kreisförmigen Querschnitt mit flächenäquivalentem Durchmesser. Vorzugsweise weist ein Abstandselement eine oberseitige Abflachung auf und steht mit der oberseitigen Abflachung in flächigem Berührungskontakt mit der benachbarten Schachtrohrwand. Nach einer besonderen Ausführungsform der Erfindung ist ein Abstandselement kegelstumpfförmig ausgebildet.

Nach bevorzugter Ausführungsform der Erfindung weist ein Abstandselement eine äußere Oberfläche von 3 bis 80 mm², vorzugsweise von 10 bis 50 mm² und sehr bevorzugt von 20 bis 30 mm² auf. Äußere Oberfläche meint hier die der benachbarten Schachtrohrwand zugewandte Oberfläche bzw. die Oberfläche der aus der Schachtrohrwandebene herausragenden Bereiche eines Abstandselementes. Zweckmäßigerweise weist ein Abstandselement bezogen auf die Schachtrohrwandebene einen Durchmesser d auf, der größer ist als der Durchmesser der der benachbarten Schachtrohrwand zugewandten Oberfläche.

Zweckmäßigerweise bilden die Abstandselemente 0,1 bis 4,0, vorzugsweise 0,4 bis 2 %, bevorzugt 0,4 bis 1,0 % der Oberfläche einer Schachtrohrwand. Es liegt im Rahmen der Erfindung, dass die Abstandselemente in zumindest einem Bereich einer Schachtrohrwand gleichmäßig verteilt angeordnet sind und hier gleiche Abstände voneinander aufweisen. Vorzugsweise sind die Abstandselemente über die gesamte Schachtrohrwand gleichmäßig verteilt und weisen gleiche Abstände voneinander auf.

Der Erfindung liegt die Erkenntnis zugrunde, dass bei Verwirklichung eines erfindungsgemäßen Transport- und/oder Lagerbehälters nach der Unterwasserbeladung und nach der darauf folgenden Entwässerung des Behälters eine sehr einfache und funktionssichere Trocknung des Behälterinnenraumes möglich ist. Insbesondere lassen sich die Zwischenräume bzw. Abstandsspalte zwischen benachbarten Brennelementschachtrohren auf effektive Weise trocknen. Gegenüber den aus dem Stand der Technik bekannten Behältern können die Trocknungszeiten erheblich reduziert werden. Auch die weiteren eingangs beschriebenen Nachteile der aus dem Stand der Technik bekannten Behälter können bei dem erfindungsgemäßen Transport- und/oder Lagerbehälter vermieden werden. Der erfindungsgemäße Behälter genügt im Hinblick auf seine Festigkeit und die Gewährleistung der Unterkritikalität allen Anforderungen, und zwar nicht nur in Bezug auf normale Transport- und Betriebsbedingungen, sondern auch im Hinblick auf hypothetische Unfallbedingungen. Die erfindungsgemäße Ausgestaltung der Brennelementschachtrohre ermöglicht zudem eine effektive Wärmeabfuhr von den Brennelementen an die Behälterwand. Hervorzuheben ist weiterhin, dass die erfindungsgemäßen Brennelementschachtrohre auf einfache und wenig aufwendige Weise hergestellt werden können.

Nachfolgend wird die Erfindung anhand einer lediglich ein Ausführungsbeispiel darstellenden Zeichnung näher erläutert. Es zeigen in schematischer Darstellung:
- **Fig. 1**: eine perspektivische Darstellung eines Brennelementschachtrohres für einen erfindungsgemäßen Transport- und/oder Lagerbehälter,
- **Fig. 2**: zwei benachbarte Brennelementschachtrohre und
- **Fig. 3**: einen vergrößerten Ausschnitt A aus der Fig. 2.

Die Figuren zeigen ein Brennelementschachtrohr 1 für einen nicht dargestellten Transport- und/oder Lagerbehälter für abgebrannte Brennelemente mit Behältermantel und Behälterinnenraum, wobei in dem Behälterinnenraum eine Mehrzahl der Brennelementschachtrohre 1 nebeneinander angeordnet ist. In den Brennelementschachtrohren 1 sind die nicht dargestellten Brennelemente aufgenommen und die Brennelementschachtrohre 1 werden zu Bündeln kombiniert, in denen sie parallel zueinander angeordnet und unmittelbar benachbart dicht gepackt sind.

Im Ausführungsbeispiel weist ein Brennelementschachtrohr 1 einen quadratischen Querschnitt auf und besteht aus vier Schachtrohrwänden 2. Erfindungsgemäß sind in den Schachtrohrwänden 2 der Brennelementschachtrohre 1 nach außen vorstehende Abstandselemente 3 ausgebildet. Im Ausführungsbeispiel sind die Abstandselemente 3 aus der zugeordneten Schachtrohrwand 2 gebildet bzw. ausgeformt. Die Abstandselemente 3 sind hier also aus dem Material der Schachtrohrwand 2 durch Bearbeitung der Schachtrohrwand 2 entstanden.

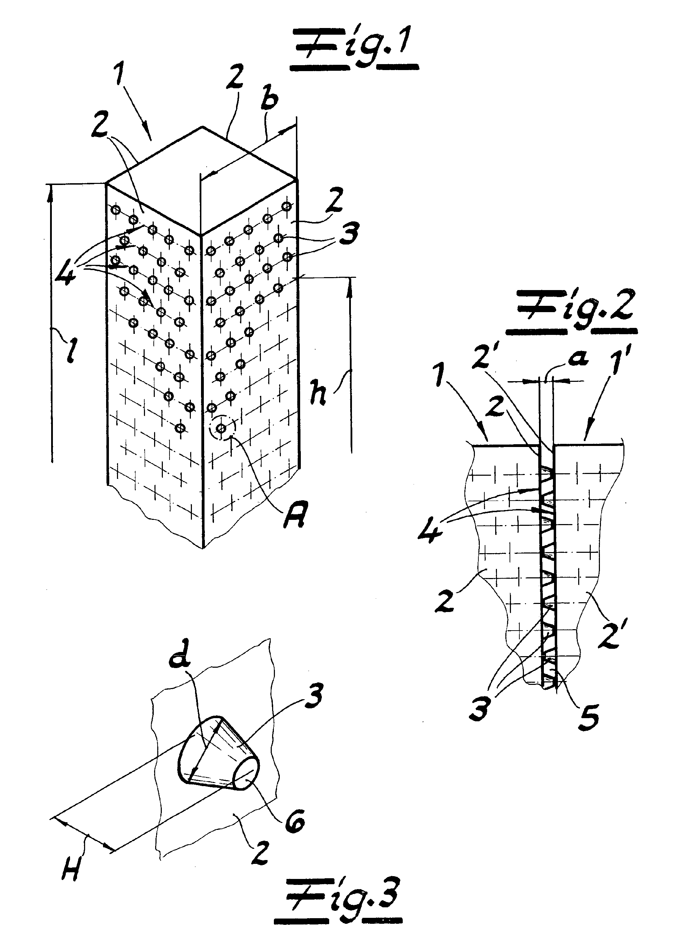

In der Fig. 2 ist erkennbar, dass die Abstandselemente 3 einer ersten Schachtrohrwand 2 in Berührungskontakt mit einer benachbarten Schachtrohrwand 2' eines benachbarten Brennelementschachtrohres 1' stehen. Neben den Abstandselementen 3 der Schachtrohrwände 2, 2' sind berührungskontaktfreie Bereiche 4 vorgesehen bzw. zwischen den benachbarten Schachtrohrwänden 2, 2' ausgebildet. Insbesondere in der Fig. 1 ist erkennbar, dass erfindungsgemäß eine Mehrzahl von Abstandselementen 3 sowohl über die Länge 1 als auch über die Breite b einer Schachtrohrwand 2 verteilt angeordnet sind. In einer Höhe h sind im Ausführungsbeispiel vier Abstandselemente 3 über die Breite b einer Schachtrohrwand 2 verteilt angeordnet. Vorzugsweise ist in jeder Höhe h zumindest 50 % der Breite b der Schachtrohrwand 2 frei von Abstandselementen 3. Dadurch wird gewährleistet, dass Flüssigkeitsdampf problemlos in Längs- und Querrichtung der Schachtrohrwände 3 bzw. der Brennelementschachtrohre 1 entweichen kann.

In Fig. 2 ist erkennbar, dass nach sehr bevorzugter Ausführungsform die Abstandselemente 3 einer Schachtrohrwand 2 in abstandselementfreie Bereiche der benachbarten Schachtrohrwand 2' ragen und dort in Berührungskontakt mit der benachbarten Schachtrohrwand 2' stehen. Ebenso ragen Abstandselemente 3 der Schachtrohrwand 2' in abstandselementfreie Bereiche der Schachtrohrwand 2 und stehen dort in Berührungskontakt mit der Schachtrohrwand 2. Bei dieser Ausführungsform definiert die Höhe der Abstandselemente 3 die Breite a des Abstandsspaltes 5. Die Breite a dieses Abstandsspaltes 5 beträgt vorzugsweise 0,3 bis 2,0 mm, sehr bevorzugt 0,5 bis 1,0 mm. Ein auf diese Weise eingerichteter Abstandsspalt 5 zwischen den Schachtrohrwänden 2, 2' hat sich unter anderem im Hinblick auf eine effektive Trocknung der Zwischenräume besonders bewährt.

Fig. 3 zeigt eine bevorzugte Ausführungsform eines Abstandselementes 3. Zweckmäßigerweise und im Ausführungsbeispiel nach Fig. 3 weist ein Abstandselement 3 eine oberseitige Abflachung 6 auf und steht mit dieser oberseitigen Abflachung 6 in flächigem Berührungskontakt mit der benachbarten Schachtrohrwand 2'. Bevorzugt und im Ausführungsbeispiel ist ein Abstandselement 3 kegelstumpfförmig ausgebildet.

## Patentansprüche

1. Transport- und/oder Lagerbehälter für abgebrannte Brennelemente mit Behältermantel und Behälterinnenraum,
wobei in dem Behälterinnenraum eine Mehrzahl von Brennelementschachtrohren (1) für die Aufnahme der Brennelemente nebeneinander angeordnet ist,
wobei in zumindest einem Teil der Schachtrohrwände (2) der Brennelementschachtrohre (1) nach außen vorstehende Abstandselemente (3) ausgebildet sind,
wobei die Abstandselemente (3) einer Schachtrohrwand (2) in Berührungskontakt mit einer benachbarten Schachtrohrwand (2') eines benachbarten Brennelementschachtrohres (1') stehen,
wobei neben den Abstandselementen (3) berührungskontaktfreie Bereiche (4) zwischen den benachbarten Schachtrohrwänden (2, 2') vorgesehen sind
und wobei eine Mehrzahl von Abstandselementen (3) sowohl über die Länge 1 als auch über die Breite b einer Schachtrohrwand (2) verteilt angeordnet sind.

2. Transport- und/oder Lagerbehälter nach Anspruch 1, wobei über 40 Abstandselemente pro m² einer Schachtrohrwand (2) vorgesehen sind.

3. Transport- und/oder Lagerbehälter nach einem der Ansprüche 1 oder 2, wobei die Abstandselemente (3) 0,1 bis 4,0 % der Oberfläche einer Schachtrohrwand (2) bilden.

4. Transport- und/oder Lagerbehälter nach einem der Ansprüche 1 bis 3, wobei die Abstandselemente (3) in zumindest einem Bereich einer Schachtrohrwand (2) gleichmäßig verteilt angeordnet sind und hier gleiche Abstände voneinander aufweisen.

5. Transport- und/oder Lagerbehälter nach einem der Ansprüche 1 bis 4, wobei die Abstandselemente aus der Schachtrohrwand (2) gebildet sind.

6. Transport- und/oder Lagerbehälter nach einem der Ansprüche 1 bis 5, wobei die Höhe H eines Abstandselementes in Bezug auf die Ebene der Schachtrohrwand (2) 0,3 bis 2,5 mm, bevorzugt 0,3 bis 2 mm, sehr bevorzugt 0,5 bis 1,5 mm beträgt.

7. Transport- und/oder Lagerbehälter nach einem der Ansprüche 1 bis 6, wobei ein Abstandselement (3) eine äußere Oberfläche von 3 bis 80 mm², vorzugsweise von 10 bis 50 mm² und sehr bevorzugt von 20 bis 30 mm² aufweist.

8. Transport- und/oder Lagerbehälter nach einem der Ansprüche 1 bis 7, wobei die Kontaktfläche eines Abstandselementes kreisförmig ausgebildet ist.

9. Transport- und/oder Lagerbehälter nach einem der Ansprüche 1 bis 8, wobei ein Abstandselement (3) eine oberseitige Abflachung (6) aufweist und mit der oberseitigen Abflachung (6) in flächigem Berührungskontakt mit der benachbarten Schachtrohrwand (2') steht.
